# EUROPEAN PATENT APPLICATION

(11) **EP 0 881 570 A1**
(43) Date of publication of application: **02.12.1998**
(21) Application number: 98102894.7
(22) Date of filing: 19.02.1998
(51) Int. Cl.: G06F 11/14

(54) **Database recovery system**

(30) Priority: 30.05.1997 JP 141828/97
(71) Applicant: Ogawa, Atsuro, Nagoya-shi, Aichi, 460-0022 (JP)
(72) Inventor: Ogawa, Atsuro, Nagoya-shi, Aichi, 460-0022 (JP)
(74) Representative: Bohnenberger, Johannes, Dr.

(57) **Abstract**

A database recovery system and a computer-readable recording medium recorded with a recovery program with which it is possible to update a database during backup with a small load and to recover a database even when the date and time at which a backup copy was taken are not known exactly. When a page of a database stored in a storage device is updated a log-record serial number recorded in a log-record serial number record part is increased and written into a log-record of that update as an in-log-record log-record serial number and into the updated page as an in-page log-record serial number, and when a fault has occurred in the storage device the in-log-record log-record serial numbers assigned to log-records subsequent to a log-record known to have been recorded before taking of a backup copy of the database was started and the in-page log-record serial numbers assigned to the pages in the storage device shown in these log-records are respectively compared and when an in-log-record log-record serial number is larger than a respective in-page log-record serial number the respective page in the backup copy is updated using the content of the log-record and the backup copy is thereby updated to match the database at the time of the fault.

## Description

### BACKGROUND OF THE INVENTION

This invention relates to a computer database, and particularly to the recovery of a database when a fault has occurred.

The data of a database is generally stored in a secondary storage device such as a hard disc. In preparation for when a fault occurs in the hard disc or other storage device in which the database is held, a backup copy of the entire database as of a certain time is taken and held in a separate hard disc or other storage device. When a fault occurs in the storage device in which the database is stored, the database is recovered by updating that storage device after it is rewritten with the backup copy or updating the backup copy itself using a log constituting a history of updates of the database from the time at which the backup was taken.

In a conventional recovery method, the data of the storage device in which the database is held is normally copied to the backup storage device in the order in which it is physically stored, and when updating of the database is carried out in the middle of this copying process it may become impossible to obtain matching of the database in the backup storage device with the database being backed up. Consequently, there has been the problem that for the duration of the backup process it has been necessary to prohibit updating of the hard disc on which the database is stored and during that time the database cannot accept updating.

There is a method for solving this problem wherein updating of the hard disc on which the database is stored is not carried out during backup but during this time updating is accepted with the contents of updates being stored in a separate area as a REDO log and after the backing up is finished the contents of the REDO log are reflected onto the database or a log.

However, with a conventional method using a REDO log, there is the load of reflecting the contents of the REDO log after the backing up is finished.

Also, at the time of recovery, because it is necessary to apply the log from the time at which the backup was taken, when the correct date and time at which the backup was taken are not known it may not be possible to recover the database.

### SUMMARY OF THE INVENTION

It is therefore an object of the present invention to provide a database recovery system and a computer-readable recording medium recorded with a recovery program with which it is possible with a small load to update a database during backup.

Another object of the invention is to provide a database recovery system and a computer-readable recording medium recorded with a recovery program with which it is possible to recover a database even when the date and time at which a backup was taken are not known exactly.

In a database recovery system and a database recovery program provided by the invention, a serial number of a log-record is recorded in a log-record serial number record part and when a page of a database stored in a first storage device is updated the log-record serial number recorded in the log-record serial number record part is increased and that increased log-record serial number is written into a log-record of that update as an in-log-record log-record serial number and into the updated page as an in-page log-record serial number, and when a fault has occurred in the first storage device the content of a second, backup storage device holding a backup copy of the database is written into the first storage device and the in-log-record log-record serial numbers assigned to log-records subsequent to a log-record recorded before copying of the database to the second storage device was started and the in-page log-record serial numbers assigned to the pages inside the first storage device shown in these log-records are respectively compared and when the in-log-record log-record serial number is larger than the in-page log-record serial number the page in the first storage device is updated using the content of the log-record. Therefore, when taking a backup it is possible to copy content of the first storage device to the second storage device in page units at any time, and when a fault occurs in the first storage device the content of the first storage device can be recovered from the content of the second storage device.

In another database recovery system and another database recovery program provided by the invention, a serial number of a log-record is recorded in a log-record serial number record part and when a page of a database stored in a first storage device is updated the log-record serial number recorded in the log-record serial number record part is increased and that increased log-record serial number is written into a log-record of that update as an in-log-record log-record serial number and into the updated page as an in-page log-record serial number, and when a fault has occurred in the first storage device the log-record serial number that is in log-record (hereinafter, 'in-log-record log-record serial number') assigned to log-records subsequent to a log-record recorded before copying of a backup copy of the database to a second storage device was started and the in-page log-record serial numbers assigned to the pages inside the second storage device shown in these log-records are respectively compared and when the in-log-record log-record serial number is larger than the in-page log-record serial number the page in the second storage device is updated using the content of the log-record, and the updated data in the second storage device is then used as the database. Therefore, when taking a backup it is possible to copy content of the first storage device to the second storage device in page units at any time, and because for recovery it is not necessary to write content of the second storage device into the first storage device the time taken for recovery can be shortened.

### BRIEF DESCRIPTION OF THE DRAWINGS

Fig. 1 is a schematic block diagram of a database recovery system of a preferred embodiment of the invention;
Fig. 2 is a view showing the data structure inside a TLOG stack in the preferred embodiment;
Fig. 3 is a flow chart showing a procedure for updating a page of a database in the preferred embodiment; and
Fig. 4 is a flow chart showing a procedure for recovering a database according to the preferred embodiment.

### DETAILED DESCRIPTION OF THE PREFERRED EMBODIMENTS

A preferred embodiment of the invention will now be described with reference to the accompanying drawings.

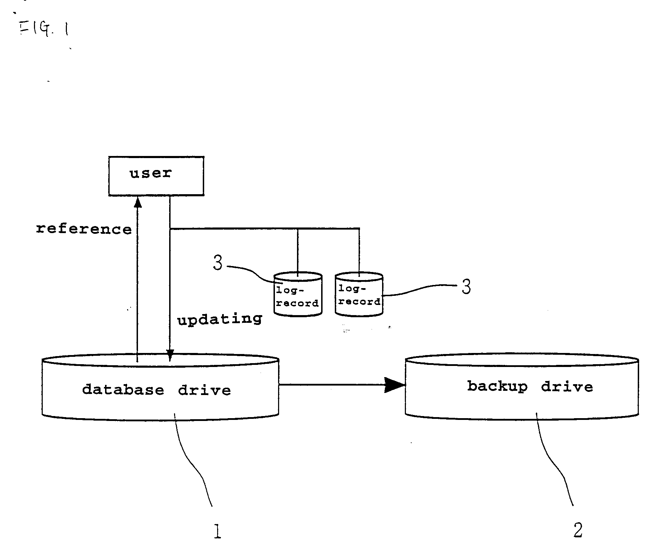

Fig. 1 is a schematic block diagram of a database recovery system according to the invention. A user can refer to and update a database stored delimited into page units each constituting a data structure of a fixed length in a database drive 1 constituting a first storage device. As a history of updates of the database, log-records each including at least a page number and updated content are written in a log drive 3 serving as a log area. Preferably two or more log drives 3 are provided, and preferably each log-record is written into the log drives 3 either simultaneously with or before the updating of the database drive 1.

In preparation for when a fault occurs in the database drive 1, the entire content of the database drive 1 is periodically copied as a backup copy to a backup drive 2 constituting a second storage device. The data in the database drive 1 is usually copied to the backup drive 2 in page units in the order in which it is physically stored in the database drive 1. When updating of the database in the database drive 1 is carried out during this backing up process, it sometimes becomes impossible to obtain matching of the database in the backup drive 2 with the database in the database drive 1; however, in the following, a construction and a procedure for by means of a database recovery system according to the invention carrying out recovery correctly even when updating of the database has been carried out during the backup operation are described.

In the database recovery system of this preferred embodiment of the invention, a log-record serial number record part in which is recorded a serial number of one of a series of log-records recording all the history of contents of pages of the database being updated is provided in a system common area of the operating system (hereinafter abbreviated to OS). The log-record serial number is for example made up of a date and a process serial number of that day. Hereinafter, the log-record serial number recorded in the log-record serial number record part will be referred to as the common log-record serial number.

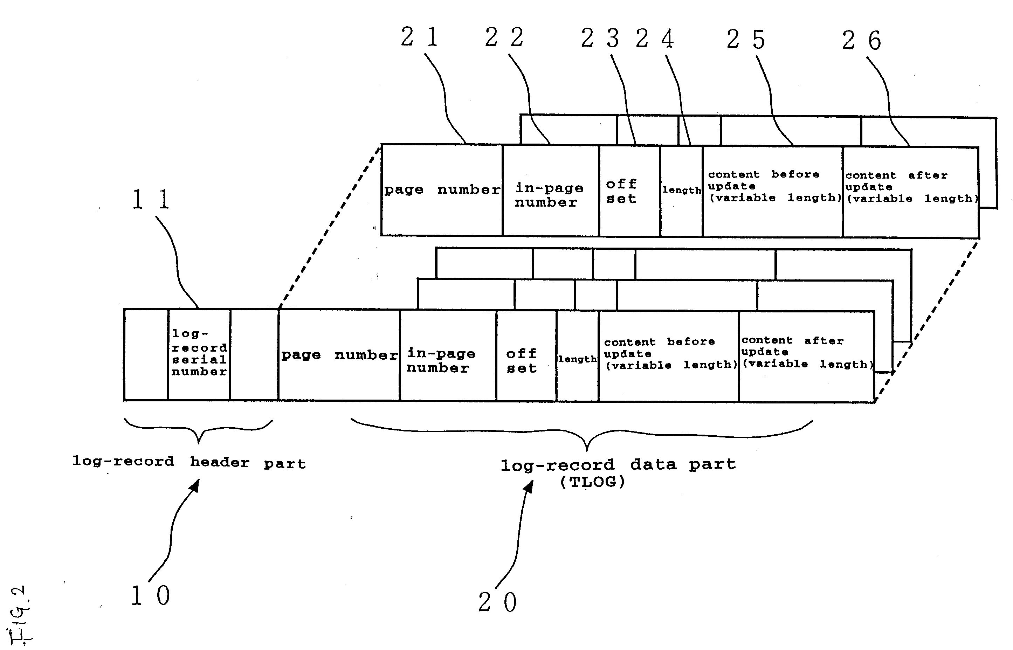

As database update history, as shown in Fig. 2, a log-record header part 10 including an in-log-record log-record serial number 11 and a log-record data part 20 (hereinafter referred to as a TLOG) including a page number 21 of an updated page, an in-page number 22 showing a position in an order of updates of data elements within the same page, an offset 23 and a length 24 showing the updated portion of the page, and the content 25, 26 before and after the update in transaction units of the page are recorded in the log drives 3. The in-log-record log-record serial number 11 is the common log-record serial number of when the page was updated.

For example at the end of each page in the database drive 1, the common log-record serial number of the time when the page was updated is included as an in-page log-record serial number. The reason for an example wherein the in-page log-record serial number is disposed at the end of the inside of the page being shown here is that when this is done, even when a fault has occurred during writing to the database drive 1, recovery of the page is possible by a relatively simple method using the in-page log-record serial number and the in-log-record log-record serial number and content before and after the update recorded in the log-record. However, the database recovery system of the present invention is not limited to cases wherein the in-page log-record serial number is disposed at the end of the page.

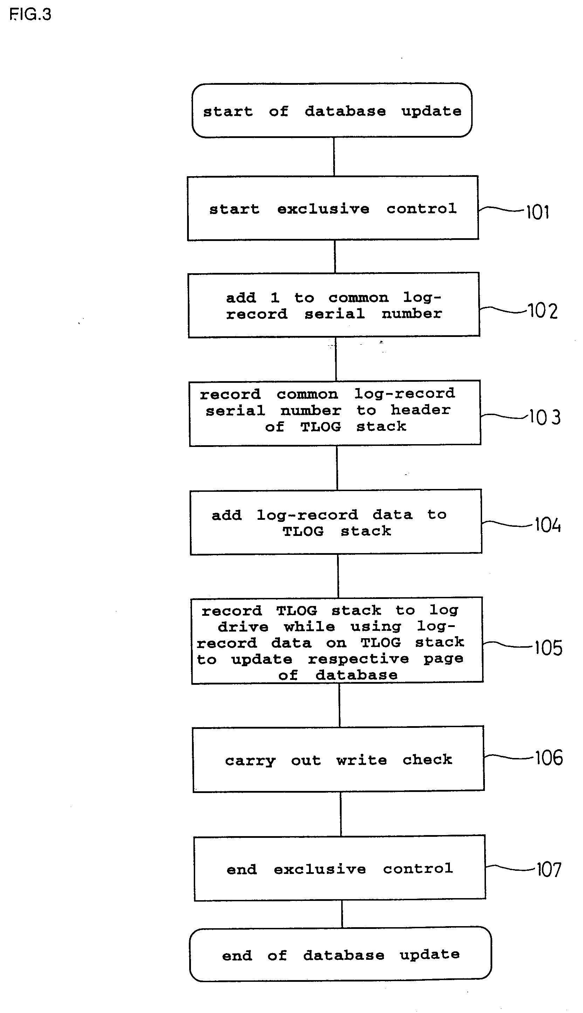

Fig. 3 is a flow chart showing a procedure for updating the content of a page.

The series of processes for updating the content of a page are carried out under exclusive control so that they do not simultaneously overlap with similar processing of other transactions.

After exclusive control is started in a step 101, in step 102 a common log-record serial number recorded in the log-record serial number record part is increased. In this preferred embodiment 1 is added to it, but provided that the common log-record serial number increases monotonously the number by which it is increased is not limited. It is also possible to always increase the common log-record serial number by a negative number, i.e. to reduce it monotonously. In step 103 this increased common log-record serial number is recorded in the header part of a TLOG stack as an in-log-record log-record serial number.

Next, in step 104 a TLOG, which is the log-record data part, is added to a TLOG stack. As the TLOG stack, for example a buffer in the main memory of a computer is used.

In step 105 a page in the database drive 1 is updated using the content of the TLOG in the TLOG stack. At the same time, the contents of the TLOG stack are recorded in the log drives 3. At this time, the common log-record serial number is written in the updated page in the database drive 1 as an in-page log-record serial number and in the log-record header part in the log drives 3 as an in-log-record log-record serial number.

In step 106, by means of generally known computer hardware or a function of the OS, or by reading the log drives 3 again, a write check is carried out. During this time, transactions of processing outside this exclusive control interval can be executed concurrently. Nonvolatile storage devices are used for the log drives 3, but the record is preferably made in duplicate in case a fault occurs in the log-record.

After that, exclusive control ends in step 107 and updating of the database finishes.

Because the access speed of the database drive 1 is generally slower than that of the main memory, a buffer area may be provided in the main memory and reading and writing of data carried out with demand paging performed as necessary by way of the buffer area. When free space in the buffer area runs out, by a method such as LRU (Least Recently Used) the page used the least recently is written into the database drive 1 and deleted from the buffer area. In this case, the common log-record serial number of the time of writing of the page into the database drive 1 can be written into the page in the database drive 1 as the in-page log-record serial number.

In the preferred embodiment described above, log-record data of a single transaction is recorded in the TLOG stack; however, it is also possible to stack log-record data of a plurality of transactions onto the TLOG stack and update pages in the database drive 1 and write out to the log drive 3 and then perform the above-mentioned write check in batches of content of the TLOG stack at fixed intervals (for example 100 milliseconds), and the processing efficiency of the system can thereby be increased.

Next, a procedure for recovering the database using the database recovery system of the invention when a fault has occurred in the database drive 1 will be described.

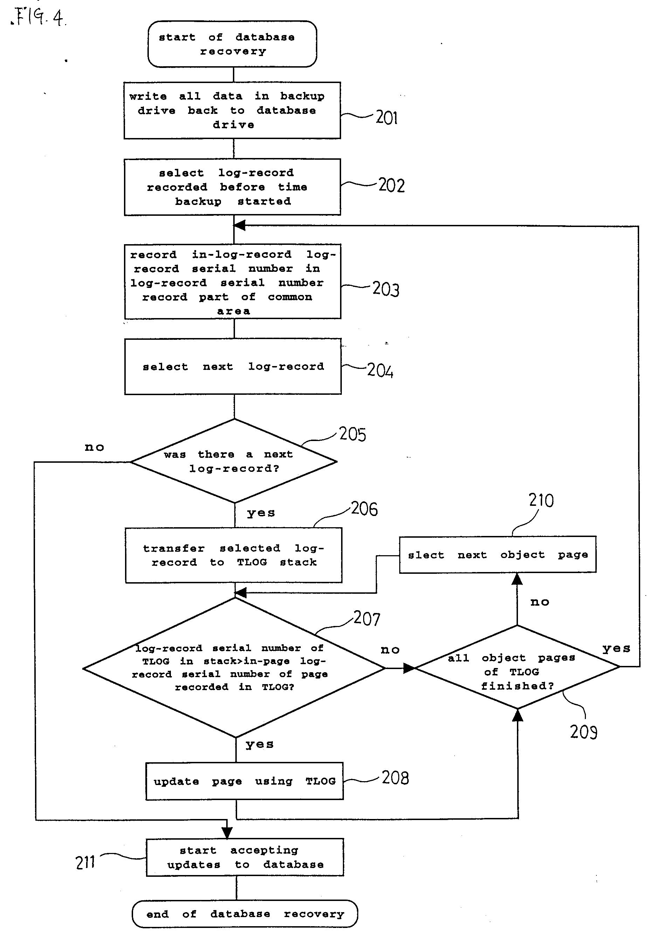

Fig. 4 is a flow chart showing a procedure for recovering the database according to the present preferred embodiment.

First, in a step 201, all the data in the backup drive 2 is written back to the database drive 1.

Then, in step 202, a log-record from before the time at which backup was started is selected from the log drive 3. It is sufficient if the log-record selected here is a log-record written before the page least recently copied from the database drive 1 to the backup drive 2 was copied, i.e. before the start of backup, and even if the exact date and time at which the backup was taken are not known, all that is necessary is for a log-record known with certainty to have been made before the backup was taken to be selected.

In step 203 the in-log-record log-record serial number of the log-record selected is recorded in the log-record serial number record part of the common area. In step 204 the next log-record, following the currently selected log-record, is selected. When it is determined in step 205 that a next log-record exists, in step 206 the log-record selected in step 204 is transferred to the TLOG stack. In step 207 the in-log-record log-record serial number in the TLOG stack and the in-page log-record serial number assigned to a page in the database drive shown by a page number recorded in the TLOG are compared, and if the in-log-record log-record serial number is greater than the in-page log-record serial number then the content of the log-record in the TLOG stack is used to update the page in step 208.

After step 208, or if in step 207 the in-log-record log-record serial number in the stack is not greater than the in-page log-record serial number assigned to the page shown by the page number recorded in the TLOG, in step 209 it is determined whether or not all object pages of the TLOG have been finished, and if there is a next object page that page is selected in step 210 and if they are all finished then processing returns to step 203.

When it is determined in step 205 that there is no next log-record, i.e. when all the log-records in the log drive 3 have been checked, in step 211 acceptance of inputting of transactions to the database is resumed and the recovery process ends. Also, even if the recovery process is interrupted, intentionally or for some other reason, by executing the procedure described above from step 201 again, with this invention, processing of unrecovered log-record data parts can be continued without carrying out repeat processing of recovered log-record data parts. This is the same even if there are repeated interruptions.

Also, when the database drive 1 has suffered a fault so serious that it can no longer be used, or when recovery has to be carried out urgently, by updating the content of the backup drive 2 by means of the log-records in the log drive 3 and then using the backup drive 2 as the database drive, the above-mentioned step 201 can be dispensed with.

As described above with reference to a preferred embodiment, with the database recovery system of the present invention, even if updating of the storage device in which the database is held is carried out while the database is being backed up it is possible to recover the database normally, and therefore it is possible to accept updating of the database during backup and also there is no load applied after the completion of backup as there is with a conventional method using a REDO log-record. That is, backup can be carried out at any time and while accepting updates of the database, and when a fault has occurred the database can be recovered normally just by starting from a log-record recorded before the backup was started and applying the subsequent log-records.

Also, even if the date and time at which a backup was taken are not known, if log-records subsequent to a log-record known with certainty to have been made before the time at which the backup was taken are applied, because unnecessary log-records are skipped, recovery can be performed normally.

The database recovery system of the invention can be realized by means of a computer and a program executing the kind of procedure described above. The computer program is normally provided on a CD-ROM, a floppy disc, magnetic tape or another magnetic recording medium, and is installed onto a hard disc or the like constituting secondary storage of the computer and then read into memory constituting primary storage of the computer system before being used.

### Fig. 1

user
reference
3 log-record
updating
1 database drive
2 backup drive

### Fig. 2

10 log-record header part
11 log-record serial number
21 page number
22 in-page number
23 offset
24 length
25 content before update (variable length)
26 content after update (variable length)
20 log-record data part (TLOG)

### Fig. 3

start of database update
101 start exclusive control
102 add 1 to common log-record serial number
103 record common log-record serial number to header of TLOG stack
104 add log-record data to TLOG stack
105 record TLOG stack to log drive while using log-record data on TLOG stack to update respective page of database
106 carry out write check
107 end exclusive control
end of database update

### Fig. 4

start of database recovery
201 write all data in backup drive back to database drive
202 select log-record recorded before time backup started
203 record in-log-record log-record serial number in log-record serial number record part of common area
204 select next log-record
205 was there a next log-record?
no
yes
206 transfer selected log-record to TLOG stack
207 log-record serial number of TLOG in stack > in-page log-record serial number of page recorded in TLOG?
208 update page using TLOG
209 all object pages of TLOG finished?
210 select next object page
211 start accepting updates to database
end of database recovery

## Claims

1. A database recovery system comprising:
a first storage device in which is stored a database delimited into pages constituting data structures of a fixed length;
a log area in which are stored log-records constituting a history of database updates and each including a log-record serial number and a page number and updated content of an updated page;
a second storage device into which content of the first storage device has been copied in page units at an arbitrary time;
means for recording a log-record serial number in a log-record serial number record part;
means for when a page in the first storage device is updated increasing a log-record serial number recorded in the log-record serial number record part and writing the increased log-record serial number to a log-record of the update in the log area as an in-log-record log-record serial number and to the updated page in the first storage device as an in-page log-record serial number; and
means for when a fault has occurred in the first storage device writing content of the second storage device into the first storage device and comparing an in-log-record log-record serial number assigned to a log-record subsequent to a log-record recorded before copying to the second storage device was started with an in-page log-record serial number assigned to a page in the first storage device and if the in-log-record log-record serial number is larger than the in-page log-record serial number updating the page in the first storage device using content of the log-record.

2. A database recovery system comprising:
a first storage device in which is stored a database delimited into pages constituting data structures of a fixed length;
a log area in which are stored log-records constituting a history of database updates and each including a log-record serial number and a page number and updated content of an updated page;
a second storage device into which content of the first storage device has been copied in page units at an arbitrary time;
means for recording a log-record serial number in a log-record serial number record part;
means for when a page in the first storage device is updated increasing a log-record serial number recorded in the log-record serial number record part and writing the increased log-record serial number to a log-record of the update in the log area as an in-log-record log-record serial number and to the updated page in the first storage device as an in-page log-record serial number;
means for when a fault has occurred in the first storage device comparing an in-log-record log-record serial number assigned to a log-record subsequent to a log-record recorded before copying to the second storage device was started with an in-page log-record serial number assigned to a page in the second storage device and if the in-log-record log-record serial number is larger than the in-page log-record serial number updating the page in the second storage device using content of the log-record; and
means for using updated data in the second storage device as the database.

3. A computer-readable recording medium recorded with a database recovery program comprising the procedures of:
delimiting a database into pages constituting data structures of a fixed length and storing the database in a first storage device;
storing in a log area log-records constituting a history of database updates and each including a log-record serial number and a page number and updated content of an updated page;
copying content of the first storage device to a second storage device in page units at an arbitrary time;
recording a log-record serial number in a log-record serial number record part;
when a page in the first storage device is updated, increasing the log-record serial number recorded in the log-record serial number record part and writing the increased log-record serial number to a log-record of the update in the log area as an in-log-record log-record serial number and to the updated page as an in-page log-record serial number; and
when a fault has occurred in the first storage device, writing content of the second storage device into the first storage device and comparing an in-log-record log-record serial number assigned to a log-record subsequent to a log-record recorded before copying to the second storage device was started with an in-page log-record serial number assigned to a page in the first storage device and if the in-log-record log-record serial number is larger than the in-page log-record serial number updating the page in the first storage device using content of the log-record.

4. A computer-readable recording medium recorded with a database recovery program comprising the procedures of:
delimiting a database into pages constituting data structures of a fixed length and storing the database in a first storage device;
storing in a log area log-records constituting a history of database updates and each including a log-record serial number and a page number and updated content of an updated page;
copying content of the first storage device to a second storage device in page units at an arbitrary time;
recording a log-record serial number in a log-record serial number record part;
when a page in the first storage device is updated, increasing the log-record serial number recorded in the log-record serial number record part and writing the increased log-record serial number to a log-record of the update in the log area as an in-log-record log-record serial number and to the updated page as an in-page log-record serial number;
when a fault has occurred in the first storage device, comparing an in-log-record log-record serial number assigned to a log-record subsequent to a log-record recorded before copying to the second storage device was started with an in-page log-record serial number assigned to a page in the second storage device and if the in-log-record log-record serial number is larger than the in-page log-record serial number updating the page in the second storage device using content of the log-record; and
using updated data in the second storage device as the database.
